# EUROPEAN PATENT SPECIFICATION

(11) **EP 3 614 353 B1**
(45) Date of publication and mention of the grant of the patent: **21.12.2022**
(21) Application number: 18190517.5
(22) Date of filing: 23.08.2018
(51) Int. Cl.: G08G 1/00, H04W 4/46

(54) **APPARATUSES, METHODS AND COMPUTER PROGRAMS FOR A LEADING VEHICLE OF A GROUP OF VEHICLES AND FOR A VEHICLE**
VERFAHRENE, VORRICHTUNGEN UND COMPUTERPROGRAMME FÜR DAS LEITERFAHRZEUG EINER FAHRZEUGENGRUPPE UND FÜR EIN FAHRZEUG
DISPOSITIF , MÉTHODE ET LOGICIEL POUR LE VÉHICULE COMMANDANT UN GROUPE DE VÉHICULES ET POUR UN VÉHICULE.

(43) Date of publication of application: 26.02.2020
(73) Proprietor: Volkswagen Aktiengesellschaft, 38440 Wolfsburg (DE)
(72) Inventor: Kousaridas, Apostolos, 80992 München (DE); Alieiev, Roman, 39576 Stendal (DE); Schellmann, Malte, 80992 München (DE); Eichinger, Joseph, 80992 München (DE)

(56) References cited:
- US-A1- 2010 256 835
- US-B1- 9 141 112

## Description

The present invention relates to apparatuses, methods and computer programs for a leading vehicle of a group of vehicles and for a vehicle, more specifically, but not exclusively, to determining and removing a potential intruder within the group of vehicles.

The coordinated driving of a group of vehicles (platooning) is a field of research and development. To coordinate the vehicles, in many systems, direct vehicle-to-vehicle messages are used. Using such direct messages, a velocity and/or a direction of driving of the vehicles of the group of vehicles can be coordinated. Such direct messages are often based on a Vehicle-to-Vehicle (V2V), or more general, Vehicle-to-X (V2X) communication protocol. One of the wireless transmission standards backing V2X communication is based on IEEE (Institute of Electrical and Electronics Engineers) standard 802.11p.

US patent application 2011 / 0 270 513 A1 shows a low running control system that controls a running state of vehicles so that the vehicles run in a row, e.g. as a group of vehicles. Sensors are used to coordinate the velocity, distance and acceleration of the vehicles.

Driving within a group or platoon of vehicles may be interrupted if a vehicle "intrudes" into the group of vehicle, i.e. if the vehicle drives on the same lane in between two vehicles of the group of vehicles. The Intrusion of an external vehicle to a platoon formation is a topic that may be important for the safety and the (string) stability of the platoon.

International patent application WO 2015 / 047 174 A1 relates to a system to control a vehicle platoon comprising a lead vehicle and an additional vehicle, wherein the vehicles are coordinated using wireless communication. The patent application relates to dealing with obstacles that might impede the platoon, e.g. unknown vehicles. If an obstacle is detected, the driving speed of the platoon is matched to the obstacle. If the obstacle persists, the platoon is divided into sub-platoons in front and behind the obstacle. This may interrupt the platoon and may thus lead to costly driving operations for the vehicles of the platoon.

The COMPANION European Union project defines a proposal to extend CAM (Cooperative Awareness) messages to include fields to inform other vehicles of a detection of an intruder, specifying an identification of the intruder along with its current speed and distance gap. The proposal does not include information on how to deal with the intruder once it is detected.

In US 9,141,112 B1, a system is shown, in which a caravan of vehicles is managed. In US 9,141,112 B1, if a vehicle strays too far off a caravan, e.g. by taking an exit, a message is transmitted to the vehicle to ask, whether the vehicle desires to leave the caravan. If the vehicle confirms that it desires to leave the caravan, or if no answer is given, the vehicle is removed from the caravan.

There may be a desire for an improved concept for controlling a group of vehicles, which enables removing the potential intruder from the group of vehicles.

The invention is based on the finding that intruders within a group or platoon of vehicle are not necessarily malevolent - in many cases, a vehicle may intrude into a platoon of vehicles due to a (dangerous) traffic situation, due to the vehicle joining the road from a ramp, or due to the vehicle not recognizing that it is intruding a platoon of vehicles. The invention is based on a transmitting a signal (e.g. an "intruder probing signal") to the potential intruder, to find out, whether the potential intruder is cooperative, i.e. willing to leave the group of vehicles in the near future. If this is the case, the leading vehicle of the group of vehicles may transmit driving instructions to the intruding vehicle, causing the intruding vehicle to leave the group of vehicle. If the intruder is uncooperative, e.g. because it is malevolent or because due to traffic or due to a defect at the intruder, the leading vehicle may for example cause the group of vehicles to split up, to form a first group of vehicles driving ahead of the intruder and a second group of vehicles driving behind the intruder, which may be joined again at a later stage.

According to a first aspect of the invention, a method for a leading vehicle of a group of vehicles according to claim 1 is provided. Determining, whether the potential intruder is a cooperative intruder and removing the potential intruder based on this determination may enable a resolve of the intrusion without having to split up the group of vehicles, which may enable a quick and safe removal of the potential intruder from the group of vehicles and which may enable preserving the platoon.

The potential intruder vehicle is determined to be a cooperative intruder if a cooperation indication is received from the potential intruder vehicle in response to the intruder probing message. The cooperation indication indicates a willingness of the potential intruder vehicle to cooperate. Receiving the cooperation indication in response to the intruder probing message may inform the leading vehicle, that communication is possible with the potential intruder vehicle and that the potential intruder vehicle is willing to resolve the intrusion situation.

According to the invention, the potential intruder vehicle is removed from the group of vehicles by transmitting a driving instruction to the potential intruder vehicle if the potential intruder vehicle is a cooperative intruder. This may enable the potential intruder vehicle to leave the group of vehicles while the group of vehicles remains intact.

The potential intruder vehicle may be determined to be an uncooperative intruder if a non-cooperation indication is received from the potential intruder vehicle in response to the intruder probing message. The non-cooperation indication may indicate an unwillingness or incapability of the potential intruder vehicle to cooperate. This may for example be the case, if a defect or a traffic situation prohibits a cooperation by the potential intruder vehicle.

Alternatively or additionally, the potential intruder vehicle may be determined to be an uncooperative intruder if no cooperation indication is received from the potential intruder vehicle within a pre-determined time interval after transmitting the intruder probing message. If the potential intruder vehicle does not react to the intruder probing message, it may be assumed that the potential intruder vehicle is uncooperative, e.g. because it lacks the ability to communicate with the leading vehicle.

In some embodiments, the method further comprises repeating transmitting the intruder probing message if no cooperation indication is received from the potential intruder vehicle within a pre-determined time interval after transmitting the intruder probing message. This may avoid situations, in which the intruder probing message is lost due to signal collision or signal shadowing.

The potential intruder is removed from the group of vehicles by transmitting group driving instructions to the group of vehicles if the potential intruder vehicle is an uncooperative intruder.

For example, the group driving instructions may split up the group of vehicles. The group driving instructions may be used to remove the potential intruder vehicle if it is uncooperative.

In various embodiments, the method further comprises determining an impact of the potential intruder vehicle on the group of vehicles. The potential intruder vehicle might be removed from the group of vehicles by transmitting group driving instructions to the group of vehicles if the potential intruder vehicle is an uncooperative intruder and if the impact of the potential intruder on the group of vehicles is above a threshold. This may enable tolerating a potential intruder vehicle if it cannot be easily removed from the group of vehicle, e.g. because of the traffic situation or because it is uncooperative intruder.

In at least some embodiments, the method comprises reducing an impact of the potential intruder vehicle on the group of vehicles based on whether the potential intruder vehicle is a cooperative intruder if the removing of the potential intruder vehicle is unsuccessful or not possible. This may enable maintaining an operation of the group or platoon of vehicles while tolerating the intruder.

In some examples, not covered by the scope of the claims, a vehicle of the group of vehicles may be determined to be the potential intruder vehicle, if a leave request is received from the vehicle. This may enable removing a vehicle from the group of vehicle in response to a leave requests using the mechanisms in place to deal with an intruder. Alternatively or additionally, the potential intruder vehicle may be determined based on sensor data of the leading vehicle. Alternatively or additionally, the potential intruder vehicle may be determined based on one or more messages received from one or more other vehicles of the group of vehicles. This may enable a direct detection based on sensor data of the leading vehicle or of the other vehicles of the group of vehicles.

In at least some embodiments, the intruder probing message is transmitted to the potential intruder vehicle based on the determination/detection of the potential intruder vehicle, i.e. event driven and not periodically. This may remove an amount of messages transmitted, and may thus lower a risk of signal collision.

According to another aspect of the invention, a method for an intruder vehicle according to claim 6 is provided.

This may enable a coordination between the vehicle and the leading vehicle, allowing the vehicle to be quickly and safely removed from among the group of vehicles.

The cooperation indication may be transmitted to the leading vehicle if a traffic situation of the vehicle allows for a cooperation. If the traffic situations allows for it, the vehicle may be quickly and safely removed from among the group of vehicles.

The method may comprise transmitting a non-cooperation indication if the traffic situation of the vehicle prevents the vehicle from cooperating. This may indicate to the leading vehicle, that the vehicle is potentially cooperative, but unable to cooperate at the current time. At a later time, a cooperation indication may be transmitted, so the leading vehicle might repeat the intruder probing message at a later time if the vehicle is not (too) detrimental to a coordinated driving effort of the group of vehicles.

Alternatively, the cooperation indication may be transmitted to the leading vehicle if a traffic situation of the vehicle allows for a cooperation, and the method may comprise foregoing the transmission of the cooperation indication if the traffic situation of the vehicle prevents the vehicle from cooperating. This may reduce an amount of messages transmitted between vehicles, which may decrease the risk of message collisions.

According to this aspect of the invention, the method further comprises receiving a driving instruction from the leading vehicle of the group of vehicles and operating the vehicle based on the driving instruction. The driving instructions may be used to quickly and safely remove the vehicle from among the group of vehicles.

An example not falling within the scope of the claims may further comprise transmitting a leave request to the leading vehicle. The intruder probing message may be received from the leading vehicle in response to the leave request. A vehicle transmitting a leave request may be treated as cooperative intruder, and may be removed from the group of vehicles accordingly.

According to another aspect of the invention, a computer program according to claim 8 is provided having a program code for performing at least one of the methods, when the computer program is executed on a computer, a processor, or a programmable hardware component.

According to another aspect of the invention, an apparatus for a leading vehicle of a group of vehicles according to claim 9 is provided.

Determining, whether the potential intruder is a cooperative intruder and removing the potential intruder based on this determination may enable a resolve of the intrusion without having to split up the group of vehicles.

According to another aspect of the invention, an apparatus for an intruder vehicle according to claim 10 is provided.

Such an apparatus may enable a coordination between the vehicle and the leading vehicle, allowing the vehicle to be quickly and safely removed from among the group of vehicles.

Some other features or aspects will be described using the following non-limiting embodiments of apparatuses or methods or computer programs or computer program products by way of example only, and with reference to the accompanying figures, in which:
- Fig. 1a and 1b: show flow diagrams of embodiments of a method for a leading vehicle of a group of vehicles;
- Fig. 1c: shows a block diagram of an embodiment of an apparatus for a leading vehicle of a group of vehicles;
- Fig. 2a: shows a flow chart of an embodiment of a method for a vehicle;
- Fig. 2b: shows a block diagram of an embodiment of an apparatus for a vehicle; and
- Fig. 3: shows a flow chart of a method for dealing with a cooperative intruder according to an embodiment.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed.

Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

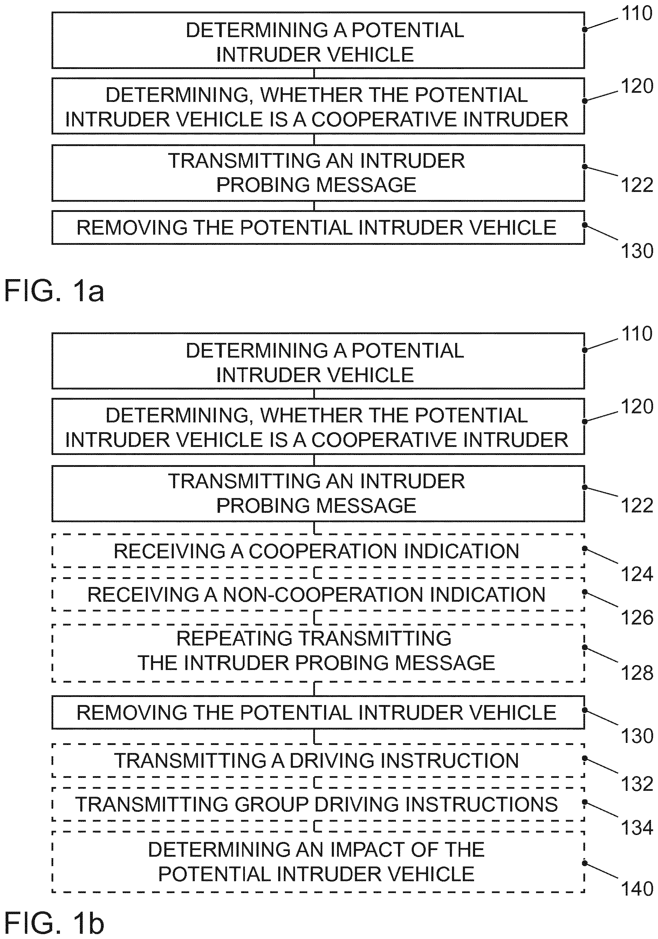

Fig. 1a and 1b show flow diagrams of embodiments of a method for a leading vehicle 100 of a group of vehicles 300. The method comprises determining (e.g. detecting) 110 a potential intruder vehicle 200 within the group of vehicles 300. The method further comprises determining 120, whether the potential intruder vehicle 200 is a cooperative intruder by transmitting 122 an intruder probing message to the potential intruder vehicle 200. The intruder probing message requests the intruder vehicle to provide information related to a presence of the potential intruder vehicle 200 among the group of vehicles 300. The method further comprises removing 130 the potential intruder vehicle 200 from the group of vehicles 300 or dissolving the platoon based on whether the potential intruder vehicle 200 is a cooperative intruder. For example, the platoon may be dissolved if the potential intruder vehicle 200 cannot be removed from the platoon and the potential intruder vehicle cannot be allowed to drive within the platoon (e.g. as it violates a cost function of the platoon).

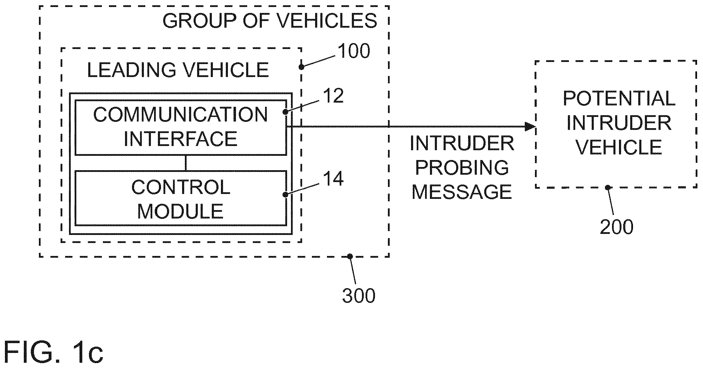

Fig. 1c shows a block diagram of an embodiment of an (corresponding) apparatus 10 for the leading vehicle 100 of the group of vehicles 300. The apparatus 10 comprises a communication interface 12 for communicating wirelessly with vehicles of the group of vehicles 300. The apparatus 10 further comprises a control module 14 configured to determine (e.g. detect) the potential intruder vehicle 200 within the group of vehicles 300. The control module 14 is configured to determine, whether the potential intruder vehicle 200 is a cooperative intruder by transmitting the intruder probing message to the potential intruder vehicle 200 via the communication interface 12. The intruder probing message requests the intruder vehicle to provide information related to a presence of the potential intruder vehicle 200 among the group of vehicles 300. The control module 14 is configured to remove the potential intruder vehicle 200 from the group of vehicles 300 based on whether the potential intruder vehicle 200 is a cooperative intruder. If not specified otherwise, the control module 14 may be configured to perform additional method steps of the method introduced in connection with Figs. 1a and 1b.

Fig. 1c further shows the leading vehicle 100 comprising the apparatus 10. Fig. 1c further shows the group of vehicles 300 comprising the leading vehicle 100, wherein the potential intruder vehicle is located among/within the group of vehicles.

The following description relates to the method of Figs. 1a and 1b and to the apparatus 10 of Fig. 1c.

The embodiments relate to handling an intruder within / among a group of vehicles (e.g. a platoon of vehicles). Grouping vehicles into platoons is method of increasing the capacity of roads. Within a platoon, a group of vehicles may be coordinated to accelerate or break simultaneously, allowing for smaller distances between the vehicles. For example, the group of vehicles may form a platoon. Among the vehicles of the platoon (the group of vehicles), vehicle-to-vehicle communication may be used to coordinate the group of vehicles. The leading vehicle 100, the group of vehicles 300 and/or the potential intruder vehicle 200 may be vehicles for transporting goods, e.g. a truck or a lorry. Alternatively, the leading vehicle 100, the group of vehicles 300 and/or the potential intruder vehicle 200 may be (personal) automobiles. In some embodiments, the leading vehicle 100, the group of vehicles 300 and/or the potential intruder vehicle 200 may be autonomous vehicles or semi-autonomously driven vehicles. The leading vehicle 100, the group of vehicles 300 and/or the potential intruder vehicle 200 may be suitable or configured for driving in a platoon of vehicles. In some embodiments, the leading vehicle 100, the group of vehicles 300 and/or the potential intruder vehicle 200 may be airplanes, helicopters or ships suitable or configured for moving in a platoon of airplanes, helicopters or ships. In some embodiments, the leading vehicle 100, the group of vehicles 300 and/or the potential intruder vehicle 200 may be configured to be steered in a coordinated driving configuration.

According to the invention, a platoon or group of vehicles comprises a leading vehicle, i.e. a vehicle that determines and controls a velocity and heading of the group of vehicles and that transmits and initiates an execution of driving instructions to be executed by vehicles of the group of vehicles. The leading vehicle may lead the group of vehicles. For example, the leading vehicle may drive in front of the other vehicles of the group of vehicles. For example, if the group of vehicles/platoon of vehicles is to change lanes on the road or is to perform other driving maneuvers, these maneuvers are initiated by the leading vehicle and transmitted to the other vehicles of the group of vehicles. In an example not falling within the scope of the claims, leadership in a group or platoon of vehicles might not be bounded to an individual vehicle. For example, the group or platoon of vehicles might be coordinated by a central entity (e.g. a "cloud" entity) or the leading function may be distributed over a plurality of vehicles. For example, the leading vehicle may be a vehicle of the group or platoon of vehicles having a (temporary) leading function, leading role or leading vehicle function. In some embodiments, a leading vehicle might be a vehicle of the group or platoon of vehicles that drives in front of the other vehicles of the group or platoon of vehicles or that relays the messages of the central entity.

The method comprises determining 110 a potential intruder vehicle 200 within the group of vehicles 300. For example, the potential intruder vehicle 200 may be determining 110 by the leading vehicle 100, e.g. based on sensor data of the leading vehicle 100 and/or based on received messages from the potential intruder vehicle 200, e.g. based on received cooperative awareness messages of the potential intruder vehicle. The method may comprise receiving messages (e.g. cooperative awareness messages) of the potential intruder vehicle. Alternatively, the potential intruder vehicle 200 may be determined by another vehicle of the group of vehicles 300. The determining 110 of the potential intruder vehicle may be based on one or more messages from one or more other vehicles of the group of vehicles 300. The determining 110 of the potential intruder vehicle 100 may comprise receiving information related to a determination of the potential intruder vehicle 200 from one or the one or more other vehicles of the group of vehicles. The determining 110 of the potential intruder vehicle 100 may be based on the information related to the determination of the potential intruder vehicle 200. Alternatively, the potential intruder vehicle 200 may inform the leading vehicle 100 about the intrusion of the potential intruder vehicle 200 within the group of vehicle 300.

In an example not falling within the scope of the claims, the determining 110 of the potential intruder vehicle 100 may comprise receiving a leave request from the potential intruder vehicle 200. The potential intruder vehicle 200 may be determined based on the leave request. For example, the potential intruder vehicle 200 may be a vehicle of the group of vehicles that wants to leave the group of vehicles. The vehicle of the group of vehicles that wants to leave the group of vehicles may be regarded or treated as potential intruder vehicle 200, e.g. as cooperative intruder. A vehicle of the group of vehicles 300 may be determined to be the potential intruder vehicle 200, if a leave request is received from the vehicle.

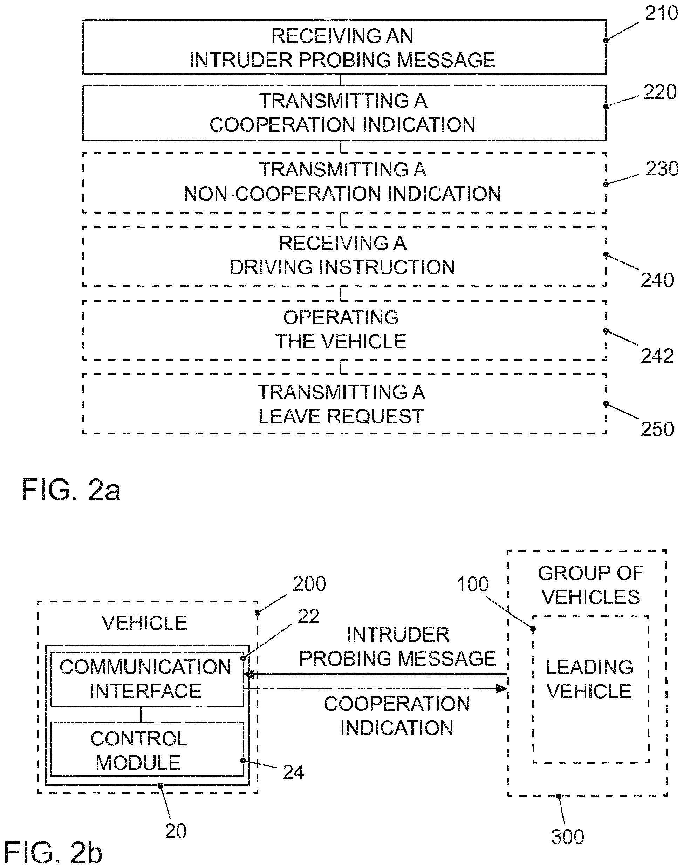

Alternatively or additionally, the determining 110 of the potential intruder vehicle 100 may comprise receiving an anticipatory cooperation indication from the potential intruder vehicle 200. For example, the potential intruder vehicle 200 (e.g. the vehicle 200 introduced in connection with Figs. 2a and 2b) may broadcast the anticipatory cooperation indication, e.g. if the potential intruder vehicle 200 determines that it has intruded into a group of vehicles. In at least some embodiments, the potential intruder vehicle 200 may be a vehicle that is located within/among of directly in front of the group of vehicles. For example, the group of vehicles may comprise a plurality of vehicles driving in a row of vehicles, e.g. with substantially the same velocity, acceleration/deceleration and distance. The potential intruder vehicle 200 may be a vehicle that is located in between vehicles of the group of vehicles, e.g. on the same road and/or within the row of vehicles. In some embodiments, the potential intruder vehicle 200 may also be a vehicle that is located directly in front of the leading vehicle 100. The potential intruder vehicle 200 being within or among the group of vehicles may correspond to the potential intruder vehicle 200 driving between two vehicles of the group of vehicles or driving in front of the leading vehicle of the group of vehicles. The potential intruder vehicle 200 may be a vehicle that is located in such proximity to the group of vehicles 300 that its presence negatively impacts the desired maneuver of this group of vehicles. For example, the potential intruder vehicle 200 might not necessarily located in between vehicles of the group or platoon of vehicles.

The method further comprises determining 120, whether the potential intruder vehicle 200 is a cooperative intruder. The potential intruder vehicle 200 may be determined 120 to be a cooperative intruder if it is willing to communicate with the leading vehicle 100 and/or if it is willing and/or capable of following one or more driving instructions of the leading vehicle 100 in order to leave the group of vehicles. For example, the potential intruder vehicle 200 may be a cooperative intruder, if it willing to leave the group of vehicles without impairing an operation of the group of vehicles. In at least some embodiments, as further shown in Fig. 1b, the potential intruder vehicle 200 is determined to be a cooperative intruder if a cooperation indication is received 124 from the potential intruder vehicle 200 in response to the intruder probing message. The cooperation indication may indicate a willingness of the potential intruder vehicle 200 to cooperate.

In some cases, the potential intruder vehicle 200 may be an uncooperative intruder, i.e. an intruder unable or unwilling to communicate and/or an intruder, that is incapable/unable or unwilling to follow driving instructions of the leading vehicle 100 in order to leave the group of vehicles. The terms incapable and unable may be used interchangeably within the following description. For example, the potential intruder vehicle 200 may be determined to be an uncooperative intruder if a non-cooperation indication is received 126 from the potential intruder vehicle 200 in response to the intruder probing message. The non-cooperation indication may indicate an unwillingness or incapability of the potential intruder vehicle 200 to cooperate. Alternatively or additionally, the potential intruder vehicle 200 may be determined to be an uncooperative intruder if no cooperation indication is received from the potential intruder vehicle 200 within a pre-determined time interval after transmitting 120 the intruder probing message. In case no cooperation indication or a non-cooperation indication is received from the potential intruder vehicle 200, the intruder probing message may be repeated. The method may further comprise repeating 128 transmitting 120 the intruder probing message if no cooperation indication or a non-cooperation indication is received from the potential intruder vehicle 200 within a pre-determined time interval after transmitting 120 the intruder probing message.

The method comprises transmitting 122 the intruder probing message to the potential intruder vehicle 200. For example, the intruder probing message may be broadcasted to the potential intruder vehicle 200. For example, the intruder probing message may comprise an identifier of the potential intruder vehicle 200 to address the intruder probing message. Alternatively, the intruder probing message may comprise information related to a location and/or a trajectory of the potential intruder vehicle 200. The potential intruder vehicle 200 (e.g. the vehicle 200 of Figs. 2a/2b) may use the information related to the location and/or to the trajectory of the potential intruder vehicle 200 to determine, that the intruder probing message is designated for the potential intruder vehicle 200. In at least some embodiments, the intruder probing message may be a message beacon suitable for requesting the potential intruder vehicle 200 to respond to the leading vehicle 100. The intruder probing message may be a request for communication directed from the leading vehicle 100 to the potential intruder vehicle 200.

For example, the intruder probing message may be transmitted 122 to the (other vehicles of the) group of vehicles using vehicle-to-vehicle communication, e.g. using a vehicular communication protocol. The leading vehicle 100, the other vehicles of the group of vehicles 300 and/or the potential intruder vehicle 200 may communicate using one of vehicle-to-vehicle communication (V2V) / car-to-car communication (C2C). The leading vehicle 100, the other vehicles of the group of vehicles 300 and/or the potential intruder vehicle 200 may communicate based on a vehicular communication protocol, e.g. based on a direct vehicular communication protocol. The leading vehicle 100, the other vehicles of the group of vehicles 300 and/or the potential intruder vehicle 200 may communicate directly, e.g. using direct V2V / C2C communication. For example, the (direct) vehicular communication protocol may be based on Institute of Electrical and Electronics Engineers standard 802.11p. The communication interface 12 (and/or 22 as introduced in connection with Fig. 2b) may be configured to communicate via the (direct) vehicular communication protocol. In at least some embodiments, the vehicle-to-vehicle communication may be at least partially based on multi-hop communication. For example, at least some vehicles of the group of vehicles may relay the intruder probing message.

In at least some embodiments, the intruder probing message is transmitted 122 to the potential intruder vehicle 200 based on the determination 110 of the potential intruder vehicle 200, e.g. upon determination 110 of the potential intruder vehicle 200. Alternatively, the intruder probing message may be broadcasted periodically, and the potential intruder vehicle 200 may be determined 110 based on a response (e.g. the cooperation indication or the non-cooperation indication) of the potential intruder vehicle 200.

The intruder probing message requests the intruder vehicle to provide information related to a presence of the potential intruder vehicle 200 among the group of vehicles 300. For example, the intruder probing message may be a request for the information related to the presence of the potential intruder vehicle 200 among the group of vehicles 300. The information related to the presence of the potential intruder vehicle 200 among the group of vehicles 300 may comprise information related to a reason of the potential intruder vehicle 200 for intruding the group of vehicles. Alternatively or additionally, the information related to the presence of the potential intruder vehicle 200 among the group of vehicles 300 may comprise information related to the cooperation indication / non-cooperation indication of the potential intruder vehicle 200, e.g. the cooperation indication / non-cooperation indication. For example, the information related to the presence of the potential intruder vehicle 200 among the group of vehicles 300 may comprise information related to why the potential intruder vehicle 200 is unwilling / unable / incapable of cooperating. The information related to the presence of the potential intruder vehicle 200 among the group of vehicles 300 may comprise information related to driving instructions and/or driving maneuvers the potential intruder vehicle 200 is willing to perform to move away from among, within or in front of the group of vehicles (e.g. to remove the potential intruder vehicle 200 from among, within or in front of the group of vehicles).

The method further comprises removing 130 the potential intruder vehicle 200 from (among, within or in front of) the group of vehicles 300 based on whether the potential intruder vehicle 200 is a cooperative intruder. For example, the potential intruder vehicle 200 may be removed from the group of vehicles differently based on whether the potential intruder vehicle 200 is a cooperative intruder or an uncooperative intruder. The potential intruder vehicle 200 may be removed from the group of vehicles 300 by transmitting 132 a driving instruction (e.g. one or more driving instructions) to the potential intruder vehicle 200 if the potential intruder vehicle 200 is a cooperative intruder. For example, the driving instruction may comprise a lane change instruction. Additionally or alternatively, the driving instruction may be a velocity change instruction (e.g. an instruction to accelerate or decelerate the potential intruder vehicle 200).

If the potential intruder vehicle 200 is an uncooperative intruder, the potential intruder vehicle 200 may be removed from among, within or in front of the group of vehicles by one or more driving maneuvers of the group of vehicles. For example, the potential intruder may be removed 130 from the group of vehicles 300 by transmitting 134 (one or more) group driving instructions to the group of vehicles 300 if the potential intruder vehicle 200 is an uncooperative intruder. For example, the one or more group driving instructions may comprise a driving instructions related to a split driving maneuver. The group of vehicles may be split up (e.g. into a first sub-group of vehicles in front of the potential intruder vehicle 200 and a second sub-group of vehicles behind the potential intruder vehicle 200) based on the driving instructions related to the split driving maneuver. Alternatively, at least some of the vehicles of the group of vehicles may be instructed to overtake the potential intruder vehicle 200. For example, the one or more group driving instructions may comprise at least one lane change instruction and at least one velocity change instruction for at least a subset of vehicles of the group of vehicles.

In at least some embodiments, the method further comprises determining 140 an impact of the potential intruder vehicle 200 on the group of vehicles 300, e.g. an impact of the potential intruder vehicle 200 on a wireless connectivity within the group of vehicles 300, an impact of the potential intruder vehicle 200 on a velocity of the group of vehicles 300, and/or an impact of the potential intruder vehicle 200 on driving parameters (e.g. a cost function) the group of vehicles 300. The driving parameters may comprise at least one of a desired velocity of the group of vehicles, a desired acceleration profile of the group of vehicles, a desired distance of vehicles of the group of vehicles and a desired energy consumption profile of the group of vehicles. For example, the potential intruder vehicle 200 if the impact of the potential intruder vehicle 200 on the group of vehicles 300 is above a threshold. In some embodiments, the intruder probing message may be transmitted 122 to the potential intruder vehicle 200 if the impact of the potential intruder vehicle 200 on the group of vehicles 300 is above a threshold. The potential intruder vehicle 200 may be removed 130 from the group of vehicles 300 by transmitting 134 group driving instructions to the group of vehicles 300 if the potential intruder vehicle 200 is an uncooperative intruder and if the impact of the potential intruder on the group of vehicles 300 is above a threshold. In some embodiments, the method comprises reducing an impact of the potential intruder vehicle on the group of vehicles based on whether the potential intruder vehicle is a cooperative intruder if the removing 130 of the potential intruder vehicle is unsuccessful or not possible. For example, the impact of the potential intruder vehicle may be reduced by providing a group driving instruction to the group of vehicles, e.g. to adjust the velocity of the group of vehicles or to split the group of vehicles (e.g. if the potential intruder vehicle is an uncooperative intruder) or by transmitting a driving instruction to the potential intruder vehicle if the potential intruder vehicle is willing to cooperate, but incapable of changing lanes, e.g. wherein the driving instruction relates to a velocity and/or distance to vehicles of the group of vehicles of the potential intruder vehicle.

The communication interface 12 (and/or a communication interface 22 introduced in connection with Fig. 2b) may correspond to one or more inputs and/or outputs for receiving and/or transmitting information, which may be in digital (bit) values according to a specified code, within a module, between modules or between modules of different entities. For example, the communication interface 12; 22 may be a wireless communication interface. In at least some embodiments, the communication interface 12; 22 may be coupled to a wireless transceiver module for communicating with the other vehicles of the group of vehicles 300 and/or the potential intruder vehicle 200.

In embodiments the control module 14 (and/or the control module 24 introduced in connection with Fig. 2b) may be implemented using one or more processing units, one or more processing devices, any means for processing, such as a processor, a computer or a programmable hardware component being operable with accordingly adapted software. In other words, the described function of the control module 14; 24 may as well be implemented in software, which is then executed on one or more programmable hardware components. Such hardware components may comprise a general purpose processor, a Digital Signal Processor (DSP), a micro-controller, etc. The communication module 12 is coupled to the control module 14, as is the communication module 22 to the control module 24.

More details and aspects of the method and the apparatus 10 are mentioned in connection with the proposed concept or one or more examples described above or below (e.g. Fig. 2a to 3).

The method and the apparatus 20 may comprise one or more additional optional features corresponding to one or more aspects of the proposed concept or one or more examples described above or below.

Fig. 2a shows a flow chart of an embodiment of a method for a vehicle 200, e.g. the potential intruder vehicle 200 introduced in connection with Figs. 1a to 1c. The method comprises receiving 210 an intruder probing message from a leading vehicle 100 of a group of vehicles 300. The method further comprises transmitting 220 a cooperation indication to the leading vehicle 100 in response to the intruder probing message. The cooperation indication indicates a willingness of the potential intruder vehicle 200 to cooperate.

Fig. 2b shows a block diagram of an embodiment of an (corresponding) apparatus 20 for a vehicle 200. The apparatus 20 comprises a communication interface 22 for communicating wirelessly with a leading vehicle 100 of a group of vehicles 300. The apparatus 20 comprises a control module 24 configured to receive the intruder probing message from the leading vehicle 100 of the group of vehicles 300 via the communication interface 22. The control module 24 is configured to transmit the cooperation indication to the leading vehicle 100 via the communication interface 22 in response to the intruder probing message. The cooperation indication indicates a willingness of the potential intruder vehicle 200 to cooperate. If not specified otherwise, the control module 24 may be configured to perform additional method steps of the method introduced in connection with Fig. 2a. Fig. 2b further shows the vehicle 200 comprising the apparatus 20.

The following description relates to both the method of Fig. 2a and the apparatus 20 of Fig. 2b.

The method comprises receiving 210 the intruder probing message from the leading vehicle 110. For example, the intruder probing message may be received from the leading vehicle 100 via vehicle-to-vehicle communication, e.g. via a vehicular communication protocol.

The method further comprises transmitting 220 a cooperation indication to the leading vehicle 100 in response to the intruder probing message. For example, the cooperation indication may be transmitted (only) if the vehicle 200 is willing and/or capable to cooperate with the leading vehicle 100. For example, the cooperation indication may be transmitted 220 to the leading vehicle 100 if a traffic situation of the vehicle allows for a cooperation. For example, the traffic situation may be based on other vehicles surrounding the vehicle 200 and/or based on a route of the vehicle 200. For example, if the vehicle is due to move away from the lane to leave the road within a pre-defined distance, it might not be feasible for the vehicle 200 to leave the (platooning) lane, but might require the vehicle 200 to remain in place and leave the road at the earliest opportunity. In some embodiments, the traffic situation may also be based on the vehicle 200 itself: If the vehicle 200 is damaged, e.g. unable to change lanes or unable to reach a minimal mandated velocity for using another lane, the vehicle 200 might be incapable or unable to cooperate. In both cases, the vehicle 200 might be an uncooperative intruder. If the vehicle 200 is an uncooperative intruder, it may transmit a non-cooperation indication to the leading vehicle 100. The method may optionally comprise transmitting 230 a non-cooperation indication if the traffic situation of the vehicle prevents the vehicle from cooperating. Alternatively or additionally, the method may comprise foregoing the transmission 220 of the cooperation indication if the traffic situation of the vehicle prevents the vehicle from cooperating.

In at least some embodiments, the method further comprises receiving 240 a driving instruction from the leading vehicle 100 of the group of vehicles 300. The method may comprise operating 242 the vehicle based on the driving instruction. For example, an autonomous or semi-autonomous operation of the vehicle 200 may be based on the driving instruction. In at least some embodiments, the vehicle 200 may be suitable for driving in a cooperative driving mode, and the vehicle 200 may take the driving instruction into account in the cooperative driving mode. The vehicle 200 may be steered based on the driving instruction.

According to examples not falling within the scope of the claims, the vehicle 200 might be part of the group of vehicles and might desire to leave the group of vehicles, e.g. to exit the road the group of vehicles if driving on. In this case, the vehicle 200 might transmit a leave request to the leading vehicle 100. The method may further comprise transmitting 250 a leave request to the leading vehicle 100. The leave request may indicate, that the vehicle 200 desires or intends to leave the group of vehicles. Once the leading vehicle 100 has receive the leave request, it might treat the vehicle 200 as a potential intruder vehicle. The intruder probing message may be received from the leading vehicle 100 in response to the leave request. For example, the leave request may trigger the intruder probing message. In this case, the intruder probing message may be a request for communication between the leading vehicle 100 and the vehicle 200, in order to safely remove the vehicle 200 from the group of vehicles.

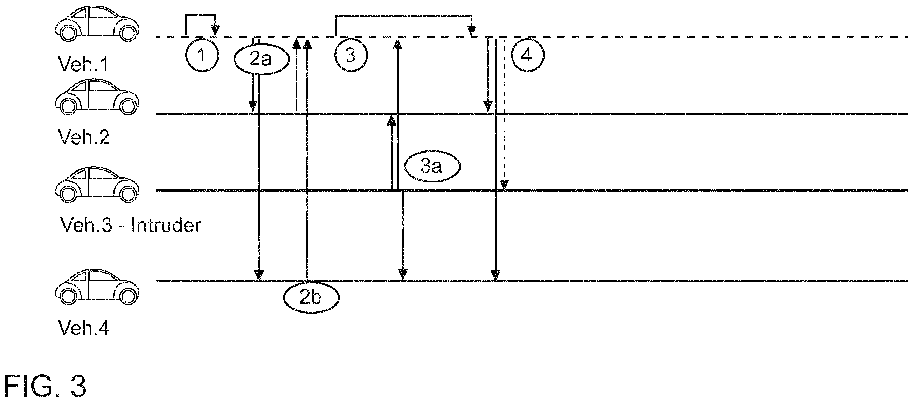

More details and aspects of the method and the apparatus 20 are mentioned in connection with the proposed concept or one or more examples described above or below (e.g. Fig. 1a to 1c, 3). The method and the apparatus 20 may comprise one or more additional optional features corresponding to one or more aspects of the proposed concept or one or more examples described above or below.

At least some embodiments relate to a method for reducing or minimizing a negative impact of an intruder vehicle in a platoon.

Cooperative driving in vehicle platoons is one of most promising vehicular applications. The goal of this application, supported by communications, may be to improve fuel and road efficiency without impairing safety. The level of efficiency improvement may depend on a distance between vehicles in the platoon (headways), on a quality of a communication system used by the platoon and an ability of each vehicle to efficiently cooperate with other vehicle present in the platoon.

The first automated highway platoon system has been demonstrated in 1962. Since this time, much work has been done in improving the efficiency of this application. Besides the quality of the communication link and vehicle reaction time, there may be another factor which can result in a dramatic decrease of platoon efficiency -- the sudden and unwanted merge of another vehicle within the headway area of the platoon. This may result in unavoidable performance degradation or even to the dissolution of the platoon if the platoon goal (e.g. a cost function) cannot be fulfilled anymore.

The problem of intruders in a platoon may be grouped into three different phases: intruder detection/determination; intruder's impact minimization; intruder or platoon resolution.. In some approaches, CAM (Cooperative Awareness Messages) messages may be extended to include fields to notify for an intruder (identification of intruders with its current speed and distance gap). Nevertheless, such approaches might neither comprise a cooperative nor non-cooperative solution on how to minimize the impact of intruder and how to dissolve it in a quick and efficient manner.

The proposed approach of embodiments focuses on the phases 2 and 3, i.e. may provide an efficient and cooperative way on "intruder's impact minimization and intruder/platoon resolution." The way of dealing with the platoon intruder is exemplarily shown in Fig. 3. Fig. 3 shows a flow chart of a method for dealing with a cooperative intruder according to an embodiment. Fig. 3 shows vehicles 1 to 4, wherein the group/platoon of vehicles comprises vehicles 1, 2 and 4, vehicle 1 is the leading vehicle and vehicle 3 is the potential intruder vehicle.

The proposed approach is based on the following phases:
It may be assumed that the intruder has been detected (e.g. determined 110 as introduced in connection with Figs. 1a and 1b) by one of the vehicles in the platoon (either determined/detected by the platoon leader, informed by a platoon member or the intruder itself informs the platoon). For the last case, the intruder may be denoted as a "Cooperative Intruder". It can happen if the external vehicle is forced to become an intruder (e.g. to avoid a collision) but is willing to create as less impact on the platoon as possible.

After the intruder (e.g. the potential intruder vehicle) was detected, in step 1 of Fig. 3, the platoon core function (e.g. platoon leader/leading vehicle 100) may:
▪ Check if the cost function of platoon (such parameters of the platoon as an inter-vehicle distance, acceleration/deceleration, velocity, planned and actual trajectory, etc.) can be still fulfilled even with the intruder inside of platoon.
▪ Find the initial (local) improved or optimal solution. The solution may denoted as local, since at this point of time no intruder-relevant information might be available at the platoon decision unit.

After the initial improved or optimal solution has been calculated, in step 2 of Fig. 3, the platoon function may inform all trucks of the platoon about the intruder and about the new cost function via a multicast message 2a. By sending this message, it may also request from each platoon member to send a response message (e.g. a status update) 2b to check if the connectivity between vehicles is still sufficient to realize all necessary platoon cooperative functions given the negative impact of intruder. In step 2b, the feedback may be received from all platoon vehicles for the connectivity re-check. The negative impact that may be checked (e.g. in determining 140 the impact) is twofold: the communication link quality degradation may be a result of an increased distance between the vehicles in the platoon, if the trucks had to increase the headway distance as a reaction on the intruder. Second, the link quality may be degraded if the intruder blocks the line-of-sight of the communication link and creates an additional attenuation. Finally, an intruder, equipped with its own communication unit may be a source of an additional interference or it may occupy the available channel resources.

At the next step (3 of Fig. 3), the platoon (e.g. the leading vehicle 100) may try to communicate with the intruder (e.g. by transmitting the intruder probing message), to ask the reason of getting inside of the platoon.
a. In case if the intruder replies (3a of Fig. 3, which may be the "cooperative intruder" case, the intruder may send a reply (e.g. the cooperation indication) to the intruder probing message to everyone in the platoon) the platoon function (e.g. the leading vehicle 100) may attempt to help the intruder to resolve the reason of becoming the intruder (e.g. by transmitting 132 a driving instruction to the potential intruder vehicle 200). This negotiation may aim to find the way that intruder could leave the platoon as soon as possible.
b. If the intruder does not reply and ignores a cooperation request - after a certain time-out, the platoon function may start treating it as a "non-cooperative intruder":
   - In the case of (b) - the platoon leader may:
      - Constantly control if the platoon is still capable to realize its cost function (similar to step 1, e.g. by determining 140 an impact of the potential intruder on the group of vehicles 300)
      - Start the maneuver (Step 4 of Fig. 3) which will make intruder leave the platoon (e.g. overtake maneuver, etc., e.g. by transmitting 134 group driving instructions to the group of vehicles 300).

In step 4 of Fig. 3, after a time-out or an answer from the intruder, the leading vehicle may inform vehicles in platoon and (if cooperative) also intruder about new actions (increase the gap, split, etc.).

If the platoon detects that it cannot fulfill the platoon cost function, the platoon split may be negotiated by platoon leader

The proposed approach may enable increasing safety of platoon, enable a better fulfillment of the cost function of the platoon and enable a reduction of the probability of the platoon dissolution in the case of an intruder.

More details and aspects of the method and the approach are mentioned in connection with the proposed concept or one or more examples described above or below (e.g. Fig. 1a to 2b). The method and the approach may comprise one or more additional optional features corresponding to one or more aspects of the proposed concept or one or more examples described above or below.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope as defined by the appended claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

### List of reference signs

- 10: Apparatus
- 12: Communication interface
- 14: Control module
- 20: Apparatus
- 22: Communication interface
- 24: Control module
- 100: Leading vehicle
- 110: Determining a potential intruder vehicle
- 120: Determining, whether the potential intruder vehicle is cooperative intruder
- 122: Transmitting an intruder probing message
- 124: Receiving a cooperation indication
- 126: Receiving a non-cooperation indication
- 128: Repeating transmitting the intruder probing message
- 130: Removing the potential intruder vehicle
- 132: Transmitting a driving instruction
- 134: Transmitting group driving instructions
- 140: Determining an impact of the potential intruder vehicle
- 200: Vehicle / Potential intruder vehicle
- 210: Receiving an intruder probing message
- 220: Transmitting a cooperation indication
- 230: Transmitting a non-cooperation indication
- 240: Receiving a driving instruction
- 242: Operation the vehicle
- 250: Transmitting a leave request
- 300: Group of vehicles

## Claims

1. A method for a leading vehicle (100) of a group of vehicles (300), the method comprising:
Determining (110) a potential intruder vehicle (200) within the group of vehicles (300), wherein the potential intruder vehicle (200) is a vehicle that is not part of the group of vehicles (300) and that is located in such proximity to the group of vehicles (300) that its presence negatively impacts a desired maneuver of this group of vehicles (300);
Determining (120), whether the potential intruder vehicle (200) is a cooperative intruder by transmitting (122) an intruder probing message to the potential intruder vehicle (200), wherein the intruder probing message requests the intruder vehicle to provide information related to a presence of the potential intruder vehicle (200) among the group of vehicles (300), wherein the potential intruder vehicle (200) is determined to be a cooperative intruder if a cooperation indication is received (124) from the potential intruder vehicle (200) in response to the intruder probing message, wherein the cooperation indication indicates a willingness of the potential intruder vehicle (200) to cooperate; and
Removing (130) the potential intruder vehicle (200) from the group of vehicles (300) based on whether the potential intruder vehicle (200) is a cooperative intruder,
wherein the potential intruder vehicle (200) is removed from the group of vehicles (300) by transmitting (132) a driving instruction to the potential intruder vehicle (200) if the potential intruder vehicle (200) is a cooperative intruder, and
wherein the potential intruder is removed (130) from the group of vehicles (300) by transmitting (134) group driving instructions to the group of vehicles (300) if the potential intruder vehicle (200) is an uncooperative intruder.

2. The method according to claim 1, wherein the potential intruder vehicle (200) is determined to be an uncooperative intruder if a non-cooperation indication is received (126) from the potential intruder vehicle (200) in response to the intruder probing message, wherein the non-cooperation indication indicates an unwillingness or incapability of the potential intruder vehicle (200) to cooperate,
and/or wherein the potential intruder vehicle (200) is determined to be an uncooperative intruder if no cooperation indication is received from the potential intruder vehicle (200) within a pre-determined time interval after transmitting (120) the intruder probing message.

3. The method according to one of the previous claims, wherein the method further comprises repeating (128) transmitting (120) the intruder probing message if no cooperation indication is received from the potential intruder vehicle (200) within a pre-determined time interval after transmitting (120) the intruder probing message.

4. The method according to one of the previous claims, wherein the method further comprises determining (140) an impact of the potential intruder vehicle (200) on the group of vehicles (300), wherein the potential intruder vehicle (200) is removed (130) from the group of vehicles (300) by transmitting (134) group driving instructions to the group of vehicles (300) if the potential intruder vehicle (200) is an uncooperative intruder and if the impact of the potential intruder on the group of vehicles (300) is above a threshold, the impact being one of an impact of the potential intruder vehicle (200) on a wireless connectivity within the group of vehicles (300), an impact of the potential intruder vehicle (200) on a velocity of the group of vehicles (300) and an impact of the potential intruder vehicles (200) on a cost function of the group of vehicles (300), and/or wherein the method comprises reducing an impact of the potential intruder vehicle (200) on the group of vehicles (300) based on whether the potential intruder vehicle (200) is a cooperative intruder if the removing (130) of the potential intruder vehicle (200) is unsuccessful.

5. The method according to one of the previous claims,
wherein the potential intruder vehicle is determined (110) based on sensor data of the leading vehicle (100),
and/or wherein the potential intruder vehicle is determined (110) based on one or more messages received from one or more other vehicles of the group of vehicles (300).

6. A method for an intruder vehicle (200), the method comprising:
Receiving (210) an intruder probing message from a leading vehicle (100) of a group of vehicles (300), the vehicle (200) not being part of the group of vehicles;
Transmitting (220) a cooperation indication to the leading vehicle (100) in response to the intruder probing message, wherein the cooperation indication indicates a willingness of the potential intruder vehicle (200) to cooperate; and
receiving (240) a driving instruction from the leading vehicle (100) of the group of vehicles (300), the driving instruction being suitable for removing the intruder vehicle (200) from among, within or in front of the group of vehicles, and operating (242) the intruder vehicle (200) based on the driving instruction.

7. The method according to claim 6, wherein the cooperation indication is transmitted (220) to the leading vehicle (100) if a traffic situation of the vehicle allows for a cooperation, and/or wherein the method comprises transmitting (230) a non-cooperation indication if the traffic situation of the vehicle prevents the vehicle from cooperating,
and/or wherein the method comprises foregoing the transmission (220) of the cooperation indication if the traffic situation of the vehicle prevents the vehicle from cooperating.

8. A computer program having a program code for performing at least one of the methods according to one of the previous claims, when the computer program is executed on a computer, a processor, or a programmable hardware component.

9. An apparatus (10) for a leading vehicle (100) of a group of vehicles (300), the apparatus (10) comprising:
a communication interface (12) for communicating wirelessly with vehicles of the group of vehicles (300); and
a control module (14) configured to:
Determine a potential intruder vehicle (200) within the group of vehicles (300), wherein the potential intruder vehicle (200) is a vehicle that is not part of the group of vehicles (300) and that is located in such proximity to the group of vehicles (300) that its presence negatively impacts a desired maneuver of this group of vehicles (300), Determine, whether the potential intruder vehicle (200) is a cooperative intruder by transmitting an intruder probing message to the potential intruder vehicle (200) via the communication interface (12), wherein the intruder probing message requests the intruder vehicle to provide information related to a presence of the potential intruder vehicle (200) among the group of vehicles (300), wherein the potential intruder vehicle (200) is determined to be a cooperative intruder if a cooperation indication is received from the potential intruder vehicle (200) in response to the intruder probing message, wherein the cooperation indication indicates a willingness of the potential intruder vehicle (200) to cooperate,
Remove the potential intruder vehicle (200) from the group of vehicles (300) based on whether the potential intruder vehicle (200) is a cooperative intruder,
wherein the potential intruder vehicle (200) is removed from the group of vehicles (300) by transmitting a driving instruction to the potential intruder vehicle (200) if the potential intruder vehicle (200) is a cooperative intruder, and
wherein the potential intruder is removed from the group of vehicles (300) by transmitting group driving instructions to the group of vehicles (300) if the potential intruder vehicle (200) is an uncooperative intruder.

10. An apparatus (20) for an intruder vehicle (200), the apparatus (20) comprising:
a communication interface (22) for communicating wirelessly with a leading vehicle (100) of a group of vehicles (300); and
a control module (24) configured to:
Receive an intruder probing message from the leading vehicle (100) of the group of vehicles (300) via the communication interface (22), the intruder vehicle (200) not being part of the group of vehicles, and
Transmit a cooperation indication to the leading vehicle (100) via the communication interface (22) in response to the intruder probing message, wherein the cooperation indication indicates a willingness of the potential intruder vehicle (200) to cooperate, receive a driving instruction from the leading vehicle (100) of the group of vehicles (300), the driving instruction being suitable for removing the intruder vehicle (200) from among, within or in front of the group of vehicles, and to operate the intruder vehicle (200) based on the driving instruction.

## Patentansprüche

1. Verfahren für ein führendes Fahrzeug (100) einer Gruppe von Fahrzeugen (300), das Verfahren umfassend:
Bestimmen (110) eines potenziellen Eindringlingsfahrzeugs (200) in der Gruppe von Fahrzeugen (300), wobei das potenzielle Eindringlingsfahrzeug (200) ein Fahrzeug ist, das nicht Teil der Gruppe von Fahrzeugen (300) ist und das sich in einer solchen Nähe zu der Gruppe von Fahrzeugen (300) befindet, dass sein Vorhandensein ein gewünschtes Manöver dieser Gruppe von Fahrzeugen (300) negativ beeinflusst;
Bestimmen (120), ob das potenzielle Eindringlingsfahrzeug (200) ein kooperativer Eindringling ist, durch Übertragen (122) einer Eindringlingsprüfnachricht an das potenzielle Eindringlingsfahrzeug (200), wobei die Eindringlingsprüfnachricht das Eindringlingsfahrzeug auffordert, Informationen in Bezug auf ein Vorhandensein des potenziellen Eindringlingsfahrzeugs (200) unter der Gruppe von Fahrzeugen (300) bereitzustellen, wobei bestimmt wird, dass das potenzielle Eindringlingsfahrzeug (200) ein kooperativer Eindringling ist, wenn eine Kooperationsangabe als Reaktion auf die Eindringlingsprüfnachricht von dem potenziellen Eindringlingsfahrzeug (200) als Reaktion auf die Eindringlingsprüfnachricht empfangen wird (124), wobei die Kooperationsangabe eine Bereitschaft des potenziellen Eindringlingsfahrzeugs (200) zum Kooperieren angibt; und
Entfernen (130) des potenziellen Eindringlingsfahrzeugs (200) aus der Gruppe von Fahrzeugen (300) basierend darauf, ob das potenzielle Eindringlingsfahrzeug (200) ein kooperativer Eindringling ist, wobei das potenzielle Eindringlingsfahrzeug (200) aus der Gruppe von Fahrzeugen (300) durch Übertragen (132) eines Fahrbefehls an das potenzielle Eindringlingsfahrzeug (200) entfernt wird, wenn das potenzielle Eindringlingsfahrzeug (200) ein kooperativer Eindringling ist, und wobei der potenzielle Eindringling (130) aus der Gruppe von Fahrzeugen (300) durch Übertragen (134) von Gruppenfahrbefehlen an die Gruppe von Fahrzeugen (300) entfernt wird, wenn das potenzielle Eindringlingsfahrzeug (200) ein nicht-kooperativer Eindringling ist.

2. Verfahren nach Anspruch 1, wobei bestimmt wird, dass das potenzielle Eindringlingsfahrzeug (200) ein nicht-kooperativer Eindringling ist, wenn eine Nicht-Kooperationsangabe als Reaktion auf die Eindringlingsprüfnachricht von dem potenziellen Eindringlingsfahrzeug (200) empfangen wird (126), wobei die Nicht-Kooperationsangabe eine Nicht-Bereitschaft oder Unfähigkeit des potenziellen Eindringlingsfahrzeugs (200) zum Kooperieren angibt,
und/oder wobei bestimmt wird, dass das potenzielle Eindringlingsfahrzeug (200) ein nicht- kooperativer Eindringling ist, wenn eine Nicht-Kooperationsangabe von dem potenziellen Eindringlingsfahrzeug (200) in einem vorbestimmten Zeitintervall nach dem Übertragen (120) der Eindringlingsprüfnachricht empfangen wird.

3. Verfahren nach einem der vorstehenden Ansprüche, wobei das Verfahren ferner das Wiederholen (128) der Übertragung (120) der Eindringlingsprüfnachricht umfasst, wenn eine Nicht-Kooperationsangabe von dem potenziellen Eindringlingsfahrzeug (200) in einem vorbestimmten Zeitintervall nach dem Übertragen (120) der Eindringlingsprüfnachricht empfangen wird.

4. Verfahren nach einem der vorstehenden Ansprüche, wobei das Verfahren ferner das Bestimmen (140) einer Auswirkung des potenziellen Eindringlingfahrzeugs (200) auf die Gruppe von Fahrzeugen (300) umfasst, wobei das potenzielle Eindringlingsfahrzeug (200) aus der Gruppe von Fahrzeugen (300) durch Übertragen (134) von Gruppenfahrbefehlen an die Gruppe von Fahrzeugen (300) entfernt wird (130), wenn das potenzielle Eindringlingsfahrzeug (200) ein nicht-kooperativer Eindringling ist und wenn die Auswirkung des potenziellen Eindringlings auf die Gruppe von Fahrzeugen (300) über einem Schwellenwert liegt, wobei die Auswirkung eine Auswirkung des potenziellen Eindringlingsfahrzeugs (200) auf eine drahtlose Konnektivität in der Gruppe von Fahrzeugen (300), eine Auswirkung des potenziellen Eindringlingsfahrzeugs (200) auf die Geschwindigkeit der Gruppe von Fahrzeugen (300) oder eine Auswirkung des potenziellen Eindringlingsfahrzeugs (200) auf eine Kostenfunktion der Gruppe von Fahrzeugen (300) ist, und/oder wobei das Verfahren das Reduzieren einer Auswirkung des potenziellen Eindringlingsfahrzeugs (200) auf die Gruppe von Fahrzeugen (300) basierend darauf, ob das potenzielle Eindringlingsfahrzeug (200) ein kooperatives Eindringlingsfahrzeug ist, umfasst, wenn das Entfernen (130) des potenziellen Eindringlingsfahrzeugs (200) nicht erfolgreich ist.

5. Verfahren nach einem der vorstehenden Ansprüche,
wobei das potenzielle Eindringlingsfahrzeug basierend auf Sensordaten des führenden Fahrzeugs (100) bestimmt wird (110),
und/oder wobei das potenzielle Eindringlingsfahrzeug basierend auf einer oder mehreren Nachrichten bestimmt wird (110), die von einem oder mehreren anderen Fahrzeugen der Gruppe von Fahrzeugen (300) empfangen werden.

6. Verfahren für ein Eindringlingsfahrzeug (200), das Verfahren umfassend:
Empfangen (210) einer Eindringlingsprüfnachricht von einem führenden Fahrzeug (100) einer Gruppe von Fahrzeugen (300), wobei das Fahrzeug (200) nicht Teil der Gruppe von Fahrzeugen ist;
Übertragen (220) einer Kooperationsangabe an das führende Fahrzeug (100) als Reaktion auf die Eindringlingsprüfnachricht, wobei die Kooperationsangabe eine Bereitschaft des potenziellen Eindringlingsfahrzeugs (200) zum Kooperieren angibt; und
Empfangen (240) eines Fahrbefehls von dem führenden Fahrzeug (100) der Gruppe von Fahrzeugen (300), wobei der Fahrbefehl zum Entfernen des Eindringlingsfahrzeugs (200) aus, in oder vor der Gruppe von Fahrzeugen geeignet ist, und Betreiben (242) des Eindringlingsfahrzeugs (200) basierend auf dem Fahrbefehl.

7. Verfahren nach Anspruch 6, wobei die Kooperationsangabe (220) an das führende Fahrzeug (100) übertragen wird, wenn eine Verkehrssituation des Fahrzeugs eine Kooperation ermöglicht, und/oder wobei das Verfahren das Übertragen (230) einer Nicht-Kooperationsangabe umfasst, wenn die Verkehrssituation des Fahrzeugs das Kooperieren des Fahrzeugs verhindert,
und/oder wobei das Verfahren den Verzicht auf die Übertragung (220) der Kooperationsangabe umfasst, wenn die Verkehrssituation des Fahrzeugs verhindert, dass das Fahrzeug kooperiert.

8. Computerprogramm, das einen Programmcode zum Durchführen mindestens eines der Verfahren nach einem der vorstehenden Ansprüche aufweist, wenn das Computerprogramm auf einem Computer, einem Prozessor oder einer programmierbaren Hardwarekomponente ausgeführt wird.

9. Vorrichtung (10) für ein führendes Fahrzeug (100) einer Gruppe von Fahrzeugen (300), die Vorrichtung (10) umfassend:
eine Kommunikationsschnittstelle (12) zum drahtlosen Kommunizieren mit Fahrzeugen der Gruppe von Fahrzeugen (300); und
ein Steuermodul (14), das konfiguriert ist zum:
Bestimmen eines potenziellen Eindringlingsfahrzeugs (200) in der Gruppe von Fahrzeugen (300), wobei das potenzielle Eindringlingsfahrzeug (200) ein Fahrzeug ist, das nicht Teil der Gruppe von Fahrzeugen (300) ist und das sich in einer solchen Nähe zu der Gruppe von Fahrzeugen (300) befindet, dass sich sein Vorhandensein negativ auf ein gewünschtes Manöver dieser Gruppe von Fahrzeugen (300) auswirkt,
Bestimmen, ob das potenzielle Eindringlingsfahrzeug (200) ein kooperativer Eindringling ist, indem über die Kommunikationsschnittstelle (12) eine Eindringlingsprüfnachricht an das potenzielle Eindringlingsfahrzeug (200) übertragen wird, wobei die Eindringlingsprüfnachricht das Eindringlingsfahrzeug auffordert, Informationen in Bezug auf ein Vorhandensein des potenziellen Eindringlingsfahrzeugs (200) in der Gruppe von Fahrzeugen (300) bereitzustellen, wobei bestimmt wird, dass das potenzielle Eindringlingsfahrzeug (200) ein kooperativer Eindringling ist, wenn eine Kooperationsangabe als Reaktion auf die Eindringlingsprüfnachricht von dem potenziellen Eindringlingsfahrzeug (200) empfangen wird, wobei die Kooperationsangabe eine Bereitschaft des potenziellen Eindringlingsfahrzeugs (200) zum Kooperieren angibt,
Entfernen des potenziellen Eindringlingsfahrzeugs (200) aus der Gruppe von Fahrzeugen (300) basierend darauf, ob das potenzielle Eindringlingsfahrzeug (200) ein kooperativer Eindringling ist,
wobei das potenzielle Eindringlingsfahrzeug (200) von der Gruppe von Fahrzeugen (300) entfernt wird, indem ein Fahrbefehl an das potenzielle Eindringlingsfahrzeug (200) übertragen wird, wenn das potenzielle Eindringlingsfahrzeug (200) ein kooperativer Eindringling ist, und
wobei der potenzielle Eindringling von der Gruppe von Fahrzeugen (300) durch Übertragen von Gruppenfahrbefehlen an die Gruppe von Fahrzeugen (300) entfernt wird, wenn das potenzielle Eindringlingsfahrzeug (200) ein nicht-kooperativer Eindringling ist.

10. Vorrichtung (20) für ein Eindringlingsfahrzeug (200), wobei die Vorrichtung (20) umfasst:
eine Kommunikationsschnittstelle (22) zum drahtlosen Kommunizieren mit einem führenden Fahrzeug (100) einer Gruppe von Fahrzeugen (300); und
ein Steuermodul (24), das konfiguriert ist zum:
Empfangen einer Eindringlingsprüfnachricht von dem führenden Fahrzeug (100) der Gruppe von Fahrzeugen (300) über die Kommunikationsschnittstelle (22), wobei das Eindringlingsfahrzeug (200) nicht Teil der Gruppe von Fahrzeugen ist, und
Übertragen einer Kooperationsangabe an das führende Fahrzeug (100) über die Kommunikationsschnittstelle (22) als Reaktion auf die Eindringlingsprüfnachricht, wobei die Kooperationsangabe eine Bereitschaft des potenziellen Eindringlingsfahrzeugs (200) zum Kooperieren angibt, Empfangen eines Fahrbefehls von dem führenden Fahrzeug (100) der Gruppe von Fahrzeugen (300), wobei der Fahrbefehl zum Entfernen des Eindringlingsfahrzeugs (200) von unter, in oder vor der Gruppe von Fahrzeugen geeignet ist und zum Betreiben des Eindringlingsfahrzeugs (200) basierend auf dem Fahrbefehl.

## Revendications

1. Procédé pour un véhicule de tête (100) d'un groupe de véhicules (300), le procédé comprenant :
la détermination (110) d'un véhicule intrus potentiel (200) au sein du groupe de véhicules (300), dans lequel le véhicule intrus potentiel (200) est un véhicule qui ne fait pas partie du groupe de véhicules (300) et qui est localisé à une proximité telle du groupe de véhicules (300) que sa présence impacte négativement une manœuvre souhaitée de ce groupe de véhicules (300) ;
le fait de déterminer (120), si le véhicule intrus potentiel (200) est un intrus coopératif en transmettant (122) un message de sondage d'intrus au véhicule intrus potentiel (200), dans lequel le message de sondage d'intrus demande au véhicule intrus de fournir des informations se rapportant à une présence du véhicule intrus potentiel (200) parmi le groupe de véhicules (300), dans lequel le véhicule intrus potentiel (200) est déterminé comme étant un intrus coopératif si une indication de coopération est reçue (124) de la part du véhicule intrus potentiel (200) en réponse au message de sondage d'intrus, dans lequel l'indication de coopération indique une volonté du véhicule intrus potentiel (200) à coopérer ; et
le retrait (130) du véhicule intrus potentiel (200) du groupe de véhicules (300) sur la base du fait que le véhicule intrus potentiel (200) est un intrus coopératif, dans lequel le véhicule intrus potentiel (200) est retiré du groupe de véhicules (300) en transmettant (132) une instruction de conduite au véhicule intrus potentiel (200) si le véhicule intrus potentiel (200) est un intrus coopératif, et dans lequel l'intrus potentiel est retiré (130) du groupe de véhicules (300) en transmettant (134) des instructions de conduite de groupe au groupe de véhicules (300) si le véhicule intrus potentiel (200) est un intrus non coopératif.

2. Procédé selon la revendication 1, dans lequel le véhicule intrus potentiel (200) est déterminé comme étant un intrus non coopératif si une indication de non-coopération est reçue (126) de la part du véhicule intrus potentiel (200) en réponse au message de sondage d'intrus, dans lequel l'indication de non-coopération indique un manque de volonté ou une incapacité du véhicule intrus potentiel (200) à coopérer,
et/ou dans lequel le véhicule intrus potentiel (200) est déterminé comme étant un intrus non coopératif si aucune indication de coopération n'est reçue du véhicule intrus potentiel (200) au cours d'un intervalle de temps prédéterminé après transmission (120) du message de sondage d'intrus.

3. Procédé selon l'une des revendications précédentes, dans lequel le procédé comprend en outre la répétition (128) de la transmission (120) du message de sondage d'intrus si aucune indication de coopération n'est reçue du véhicule intrus potentiel (200) au cours d'un intervalle de temps prédéterminé après transmission (120) du message de sondage d'intrus.

4. Procédé selon l'une des revendications précédentes, dans lequel le procédé comprend en outre la détermination (140) d'un impact du véhicule intrus potentiel (200) sur le groupe de véhicules (300), dans lequel le véhicule intrus potentiel (200) est retiré (130) du groupe de véhicules (300) en transmettant (134) des instructions de conduite de groupe au groupe de véhicules (300) si le véhicule intrus potentiel (200) est un intrus non coopératif et si l'impact de l'intrus potentiel sur le groupe de véhicules (300) est supérieur à un seuil, l'impact étant un parmi un impact du véhicule intrus potentiel (200) sur une connectivité sans fil au sein du groupe de véhicules (300), un impact du véhicule intrus potentiel (200) sur une vitesse du groupe de véhicules (300) et un impact du véhicule intrus potentiel (200) sur une fonction de coût du groupe de véhicules (300), et/ou dans lequel le procédé comprend la réduction d'un impact du véhicule intrus potentiel (200) sur le groupe de véhicules (300) sur la base du fait que le véhicule intrus potentiel (200) est un intrus coopératif si le retrait (130) du véhicule intrus potentiel (200) est infructueux.

5. Procédé selon l'une des revendications précédentes,
dans lequel le véhicule intrus potentiel est déterminé (110) sur la base de données de capteur du véhicule de tête (100),
et/ou dans lequel le véhicule intrus potentiel est déterminé (110) sur la base d'un ou plusieurs messages reçus d'un ou plusieurs autres véhicules du groupe de véhicules (300).

6. Procédé pour un véhicule intrus (200), le procédé comprenant :
la réception (210) d'un message de sondage d'intrus de la part d'un véhicule de tête (100) d'un groupe de véhicules (300), le véhicule (200) ne faisant pas partie du groupe de véhicules ;
la transmission (220) d'une indication de coopération au véhicule de tête (100) en réponse au message de sondage d'intrus, dans lequel l'indication de coopération indique une volonté du véhicule intrus potentiel (200) à coopérer ; et
la réception (240) d'une instruction de conduite de la part du véhicule de tête (100) du groupe de véhicules (300), l'instruction de conduite étant appropriée pour retirer le véhicule intrus (200) de l'ensemble, de l'intérieur ou de l'avant du groupe de véhicules, et le fonctionnement (242) du véhicule intrus (200) sur la base de l'instruction de conduite.

7. Procédé selon la revendication 6, dans lequel l'indication de coopération est transmise (220) au véhicule de tête (100) si une situation de trafic du véhicule permet une coopération, et/ou dans lequel le procédé comprend la transmission (230) d'une indication de non-coopération si la situation de trafic du véhicule empêche le véhicule de coopérer,
et/ou dans lequel le procédé comprend l'abandon de la transmission (220) de l'indication de coopération si la situation de trafic du véhicule empêche le véhicule de coopérer.

8. Programme informatique ayant un code de programme pour mettre en oeuvre au moins un des procédés selon l'une des revendications précédentes, lorsque le programme informatique est exécuté sur un ordinateur, un processeur, ou un composant matériel programmable.

9. Appareil (10) pour un véhicule de tête (100) d'un groupe de véhicules (300), l'appareil (10) comprenant :
une interface de communication (12) pour communiquer sans fil avec des véhicules du groupe de véhicules (300) ; et
un module de commande (14) configuré pour :
déterminer un véhicule intrus potentiel (200) au sein du groupe de véhicules (300), dans lequel le véhicule intrus potentiel (200) est un véhicule qui ne fait pas partie du groupe de véhicules (300) et qui est localisé à une proximité telle du groupe de véhicules (300) que sa présence impacte négativement une manœuvre souhaitée de ce groupe de véhicules (300),
déterminer, si le véhicule intrus potentiel (200) est un intrus coopératif en transmettant un message de sondage d'intrus au véhicule intrus potentiel (200) par l'intermédiaire de l'interface de communication (12), dans lequel le message de sondage d'intrus demande au véhicule intrus de fournir des informations se rapportant à une présence du véhicule intrus potentiel (200) parmi le groupe de véhicules (300), dans lequel le véhicule intrus potentiel (200) est déterminé comme étant un intrus coopératif si une indication de coopération est reçue du véhicule intrus potentiel (200) en réponse au message de sondage d'intrus, dans lequel l'indication de coopération indique une volonté du véhicule intrus potentiel (200) à coopérer,
retirer le véhicule intrus potentiel (200) du groupe de véhicules (300) sur la base du fait que le véhicule intrus potentiel (200) est un intrus coopératif,
dans lequel le véhicule intrus potentiel (200) est retiré du groupe de véhicules (300) en transmettant une instruction de conduite au véhicule intrus potentiel (200) si le véhicule intrus potentiel (200) est un intrus coopératif, et
dans lequel l'intrus potentiel est retiré du groupe de véhicules (300) en transmettant des instructions de conduite de groupe au groupe de véhicules (300) si le véhicule intrus potentiel (200) est un intrus non coopératif.

10. Appareil (20) pour un véhicule intrus (200), l'appareil (20) comprenant :
une interface de communication (22) pour communiquer sans fil avec un véhicule de tête (100) d'un groupe de véhicules (300) ; et
un module de commande (24) configuré pour :
recevoir un message de sondage d'intrus de la part du véhicule de tête (100) du groupe de véhicules (300) par l'intermédiaire de l'interface de communication (22), le véhicule intrus (200) ne faisant pas partie du groupe de véhicules, et
transmettre une indication de coopération au véhicule de tête (100) par l'intermédiaire de l'interface de communication (22) en réponse au message de sondage d'intrus, dans lequel l'indication de coopération indique une volonté du véhicule intrus potentiel (200) à coopérer,
recevoir une instruction de conduite de la part du véhicule de tête (100) du groupe de véhicules (300), l'instruction de conduite étant appropriée pour retirer le véhicule intrus (200) de l'ensemble, de l'intérieur ou de l'avant du groupe de véhicules, et pour faire fonctionner le véhicule intrus (200) sur la base de l'instruction de conduite.
